# EUROPÄISCHE PATENTANMELDUNG

(11) **EP 0 681 015 A1**
(43) Veröffentlichungstag der Anmeldung: **08.11.1995**
(21) Anmeldenummer: 94106947.8
(22) Anmeldetag: 04.05.1994
(51) Int. Cl.: C09K 3/32, C02F 1/68

(54) **Bindemittel zum Aufnehmen von Oel sowie Verfahren zu seiner Herstellung**

(71) Anmelder: Schmalz, Anton, CH-7323 Wangs (CH)
(72) Erfinder: Schmalz, Anton, CH-7323 Wangs (CH)
(74) Vertreter: Büchel, Kurt F., Dr.

(57) **Zusammenfassung**

Ein Bindemittel zum Aufnehmen von Öl, Lösungsmitteln und anderen giftigen Flüssigkeiten auf Basis von Rindenschnitzeln und anderen organischen Abfallstoffen mit wenigstens teilweise aufgeschlossenen Zellen enthält zwischen 60 und 90, vorzugsweise etwa 80 Gewichtsprozent Nadelbaumrinde, und 40-10, vorzugsweise etwa 20 Gewichtsprozent eines körnigen pflanzlichen Abfallproduktes, insbesondere von Trauben- oder dergleichen Trester - vorzugsweise nach dem Brennen - oder von zerkleinerten Maiskolben - vorzugsweise nach Entfernung der Körner. Zu seiner Herstellung werden zunächst die Nadelbaumrindenabfälle grob, vorzugsweise auf etwa 10-30 mm, zerkleinert, worauf man die naturfeuchten, körnigen Pflanzenabfälle beimischt und die Mischung - vorzugsweise auf etwa 10-12% Feuchtigkeit - trocknet, die anschliessend - vorzugsweise in einer Hammermühle - auf eine Körnung von 1-6 mm weiter zerkleinert wird.

## Beschreibung

In der Literatur ist bereits eine Vielzahl von solchen Bindemitteln vorgeschlagen worden. In der Praxis haben sich allerdings nur wenige davon bisher behaupten können, bei denen man aber immer einen Kompromiss hinsichtlich mehrerer Parameter (Verschwendung wertvoller Rohstoffe; hohe Kosten; fehlende biologische Abbaubarkeit; giftige Verbrennungsrückstände; schwierige Handhabung, etc.) in Kauf nehmen musste.

Z.B. beschreibt die CH-A5-669 205 ein solches Bindemittel auf Basis Rinde, Torf und Pflanzenfasern mit Zellen, die wenigstens teilweise mittels einer Thermoschneckenpresse aufgeschlossen wurden. Dieses Bindemittel hat sich jedoch in der Praxis nicht bewährt:

Einerseits sind die Investitions- und Betriebskosten der Thermoschneckenpresse relativ hoch und machen das Endprodukt daher im Vergleich zu Wettbewerbsprodukten zu teuer; der Aufschluss der Zellen ist nur beschränkt, da durch die Pressung schon geöffnete Zellen wieder teilweise verschlossen werden; andererseits entspricht die Notwendigkeit der Verwendung von Torf nicht mehr den heutigen Anforderungen an den Natur- und Umweltschutz. Ausserdem hat sich gezeigt, dass das dort beschriebene Bindemittel einerseits schlecht riesel- und streufähig ist und andererseits von vorbeifahrenden Fahrzeugen weggeblasen wird, noch bevor es seine Saugwirkung voll entfalten konnte; schliesslich hatte es den Nachteil, dass es - auf Wasser schwimmend, mit Öl vollgesaugt oft schon nach 2-3 Stunden im Wasser versank, eine Zeit, die oft zu kurz ist, um mit dem Abheben des ölhaltigen Teppichs zurecht zu kommen.

Die Erfindung hat sich daher die Aufgabe gestellt, alle diese Nachteile zu vermeiden. Dies gelang in überraschender Weise erstmalig durch die Verwirklichung der im Kennzeichen des Anspruchs 1 beschriebenen Merkmale. Weiterentwicklungen und verbesserte Ausführungsformen der Erfindung sind in den abhängigen Ansprüchen beschrieben.

Besonders überraschend waren zwei Feststellungen:
1. Für den erfindungsgemässen Zweck kommt es sehr wesentlich auf die Art der Rindenabfälle an, welche Erkenntnis der eingangs genannten CH-A5 fehlte. So gut wie alle Laubbaumrindenabfälle stauben beim Trocknen viel zu stark und haben im Durchschnitt ein für den erfindungsgemässen Zweck um 50% geringeres Saugvermögen als Nadelbaumabfälle. Insbesondere mit Fichten- und Lärchenrinden wurden dagegen sehr gute Erfahrungen gemacht.
2. Für den erfindungsgemässen Zweck kommt es sehr wesentlich auf die Art der Pflanzenteile an. Sehr stark faserige Stoffe haben sich nicht so gut bewährt wie körnige, weil die letzteren dazu beitragen, dass das fertige Bindemittel eine sandige Struktur erhält, damit besser riesel- bzw. streufähig wird und nicht soviel Staubanteile enthält. In Frage kommen nicht nur Traubentrester oder Maiskolben (nach Entfernung der Körner), sondern auch andere Obsttrester, Samen- bzw. Kernteile von Obst- oder Gemüseresten, z.B. Kürbiskerne, sowie Ölpressrückstände, Biertreber, etc.

Sowohl die Rindenabfälle wie auch die erwähnten pflanzlichen Abfallstoffe kommen in der Regel mit etwa 40-50 Gew.% Feuchtigkeit zum Einsatz.

Bleibt man mit den Rindenabfällen unter 60%, entwickelt das Bindemittel zu wenig Saugkraft; geht man über 90% hinaus, wird das Endprodukt zu pulverig und staubt zu leicht. Analoges ist von den Grenzen des Zusatzes körniger Pflanzenreste zu sagen: Unter 10% ergibt sich zu wenig "Binde"-kraft; über 40% wird die Saugkraft des Endproduktes zu gering.

Mit den idealen Mischungsverhältnissen von etwa 80% Nadelbaumrindenabfällen und etwa 20% körnigen Pflanzenabfällen, die schwerer als Rinde sind, bleibt das Ölbindemittel besser auf der Strasse liegen, wird nicht weggeblasen und bleibt auf Wasser nach dem Aufsaugen eines allenfalls auf der Wasseroberfläche schwimmenden Ölteppichs 2-3 Tage lang schwimmen, bevor es zu sinken beginnt. Die resultierende Kuchenschicht ist wesentlich kompakter als beim Ölbindemittel nach der eingangs erwähnten CH-A5 und daher besser abzuheben.

Ein bevorzugtes Verfahren zur Herstellung des erfindungsgemässen Bindemittels ist in Anspruch 2 beschrieben. Dabei erfolgt sowohl die Vor- wie auch die Nachzerkleinerung vorzugsweise in einer Hammermühle, die Trocknung z.B. in einem Trommeltrockner, wie er für Grastrocknungsanlagen zum Einsatz kommt. Z.B. werden in einem 12m langen Rohr von 3m Durchmesser mit Hilfe eines 50 PS Ventilators in einer 10-20 cm hohen Schüttung pro Stunde 2 Tonnen Fertigprodukt mit nur noch 10-12 Gew,% Feuchtigkeit durchgesetzt, wobei die Verweilzeit etwa 25 min beträgt. Die Trockenluft kommt aus einem mit Öl beheizten Brenner mit 600°C und kühlt beim Eintritt in die Trommel durch die Verdampfungsenergie rasch ab; beim Austritt hat sie noch höchstens 80°C.

## Patentansprüche

1. Bindemittel zum Aufnehmen von Öl, Lösungsmitteln und anderen giftigen Flüssigkeiten auf Basis von Rindenschnitzeln und anderen organischen Abfallstoffen mit wenigstens teilweise aufgeschlossenen Zellen, dadurch gekennzeichnet, dass es zwischen 60 und 90, vorzugsweise etwa 80 Gewichtsprozent Nadelbaumrinde, und 40-10, vorzugsweise etwa 20 Gewichtsprozent eines körnigen pflanzlichen Abfallproduktes, insbesondere von Trauben- oder dergleichen Trester - vorzugsweise nach dem Brennen - oder von zerkleinerten Maiskolben - vorzugsweise nach Entfernung der Körner - enthält.

2. Verfahren zur Herstellung eines Bindemittels nach Anspruch 1, dadurch gekennzeichnet, dass die Nadelbaumrindenabfälle zunächst grob, vorzugsweise auf etwa 10-30 mm, zerkleinert werden, worauf man die naturfeuchten, körnigen Pflanzenabfälle beimischt und die Mischung - vorzugsweise auf etwa 10-12% Feuchtigkeit - trocknet, die anschliessend - vorzugsweise in einer Hammermühle - auf eine Körnung von 1-6 mm weiter zerkleinert wird.
